Europäisches Patentamt

European Patent Office

Office européen des brevets

(19)

(11) Publication number: **0 024 876**
**B1**

(12) **EUROPEAN PATENT SPECIFICATION**

(45) Date of publication of patent specification: **15.02.84**

(51) Int. Cl.³: **H 01 J 29/89, G 02 B 5/20**

(21) Application number: **80302870.3**

(22) Date of filing: **19.08.80**

(54) Semiconductor stripe filter.

(30) Priority: **21.08.79 JP 106947/79**
**05.06.80 JP 76490/80**

(43) Date of publication of application:
**11.03.81 Bulletin 81/10**

(45) Publication of the grant of the patent:
**15.02.84 Bulletin 84/7**

(84) Designated Contracting States:
**DE FR GB NL**

(56) References cited:
**US - A - 3 356 522**
**US - A - 4 029 394**

**PATENTS ABSTRACTS OF JAPAN, vol. 2, no.**
**49, 6th April 1978, page 720E78**
**PATENTS ABSTRACTS OF JAPAN, vol. 2, no. 1,**
**5th January 1978, page 9521E77**

(73) Proprietor: **Matsushita Electric Industrial Co., Ltd.**
**1006, Oaza Kadoma**
**Kadoma-shi Osaka-fu, 571 (JP)**

(72) Inventor: **Tanaka, Eiichiro**
**1-14, Harukimiyamoto-cho**
**Kishiwada-shi Osaka-fu (JP)**
Inventor: **Yano, Kousaku**
**3-21, Inaba 3 chome**
**Higashiosaka-shi Osaka-fu (JP)**
Inventor: **Aoki, Yoshitaka**
**4-27, Hamamachi Kadoma-shi**
**Osaka-fu (JP)**
Inventor: **Fujiwara, Shinji**
**240-167, Oaza Aomatani Minoo-shi**
**Osaka-fu (JP)**

(74) Representative: **Spencer, Graham Easdale et al,**
**A.A. Thornton & CO Northumberland House 303-**
**306, High Holborn**
**London WC1V 7LE (GB)**

Courier Press, Leamington Spa, England.

Semiconductor stripe filter

The present invention relates to semiconductor stripe filters useful for spatial colour encoding in colour TV cameras.

Semiconductor stripe optical interference filters are well known; examples of such filters are dichroic filters which are conventionally constructed by laminating layers of low refractive index material such as $MgF_2$ or $SiO_2$ alternately with layers of high refractive index material such as $CeO_2$ or $TiO_2$. Since the laminated layers are made of inorganic materials, such a filter has a high heat-resistance. However, the formation of a multi-layer structure involves difficulties in controlling the refractive index and the thickness of each layer, resulting in a wide scatter of spectral transmission characteristics.

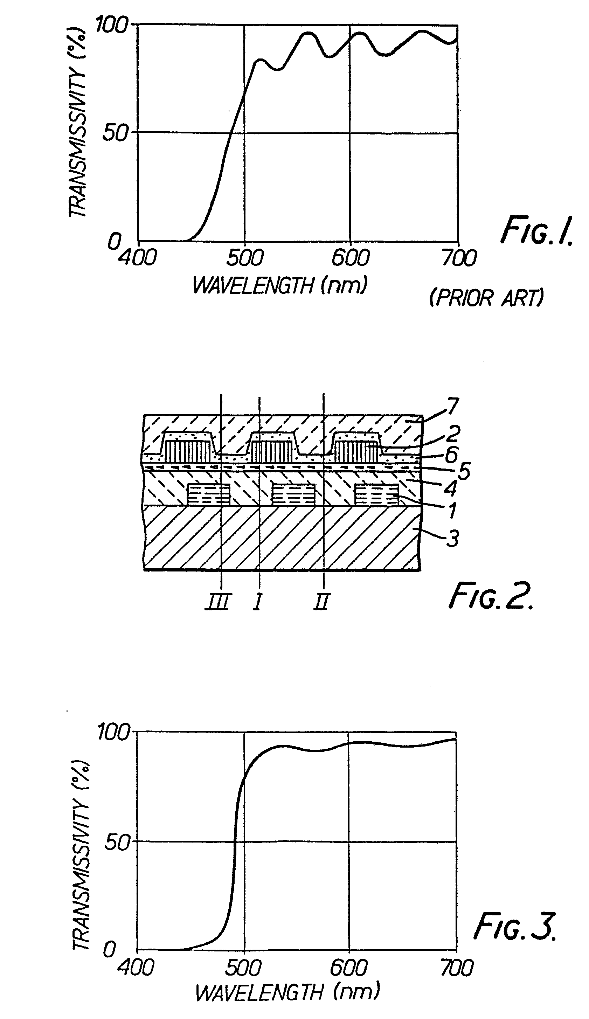

Therefore it has been desired to realize a filter. of simpler structure, and a semiconductor stripe filter utilizing the fundamental absorption of the semiconductive substance has therefore been proposed. Such a semiconductor stripe filter has a simple structure composed of a semiconductor thin-film which need not be a laminated film having as many layers as a dichroic filter. The thin-film, however, exhibits ripples in spectral transmissivity, as shown in Figure 1 of the accompanying drawings; these ripples have a bad effect on colour separation.

Semiconductor stripe filters for spatial colour encoding are known comprising a transparent underlayer, a transparent dielectric covering layer, and a striped filter element array formed of semi-conductor material between the underlayer and the covering layer (see, for example, U.S. Patent 4029394).

The improvement according to the invention comprises the provision on an underlayer of a first transparent anti-reflection layer (of refractive index $n_{T1}$) contiguous with one surface of the filter element array and a second transparent anti-reflection layer (of refractive index $n_{T2}$) contiguous with the other surface of the filter element array. The refractive index of the filter element array ($n_F$) is greater than $n_{T1}$, which is itself greater than the refractive index of the underlayer ($n_S$); $n_F$ is also greater than $n_{T2}$, which is itself greater than the refractive index of the dielectric covering layer ($n_D$). It is preferred that $\sqrt{n_F \cdot n_S}$ is within $n_{T1} \pm 15\%$ and $\sqrt{n_F \cdot n_D}$ is within $n_{T2} \pm 15\%$. The above-mentioned conditions are anti-reflection conditions.

In the following description, reference will be made to the accompanying drawings, in which:

Figure 1 is a graph showing the spectral transmissivity of a conventional colour filter ($Zn_x cd_{1-x} S$ in which $0 \leqslant x \leqslant 1$), illustrating the above-mentioned ripple effect;

Figure 2 is a sectional view of a first embodiment of a semi-conductor stripe filter according to the invention;

Figure 3 is a graph showing the spectral transmissivity in a semiconductor filter region of the filter of Figure 2;

Figure 4 is a graph showing the spectral transmissivity in a transparent region of the filter of Figure 2;

Figure 5 is a graph showing the relation between the thickness of the first transparent coating layer and the magnitude of ripples in the spectral transmissivity at the semiconductor filter region of the filter of Figure 2;

Figure 6 is a graph showing the spectral transmissivities of the semiconductor filter region and a dichroic filter region of the filter of Figure 2;

Figure 7 is a graph explaining the more detailed characteristic of spectral transmissivity of the semiconductor filter element; and

Figure 8 is a sectional view of a second embodiment of a semiconductor stripe filter according to the invention.

Referring now to Figure 2, this shows a semiconductor stripe filter for spatial colour encoding, which includes two filter components. The first filter component comprises a set of cyan light transmissive strips 1 which form a dichroic filter element, these strips being constructed conventionally. The second filter component comprises a set of yellow light transmissive strips 2 which form a semiconductor filter element. These two filter components are laminated in such a manner that the sets of strips 1 and 2 are in a predetermined angular relation.

The cyan light transmissive strips 1 are on a glass substrate 3, and a glass layer 4 of the same quality as the glass substrate 3 is deposited to cover the cyan light transmissive strips 1 and the glass substrate 3 and to form a flat upper surface. This glass layer 4 may be a $Al_2O_3$ film having a thickness of 0.15 to 0.4 $\mu$. The upper surface of the glass layer 4 is coated with a first transparent anti-reflection layer 5. On the first anti-reflection layer 5 are formed the yellow light transmissive strips 2 which may be composed of a thin film of

$$Zn_xCd_{1-x}S(0 \leqslant x \leqslant 1),$$

a semiconductor colour filter material. A second transparent anti-reflection layer 6 covers the yellow light transmissive strips 2 and also the part of the first anti-reflection layer 5 where the yellow light transmissive strips 2 are not present. The first and second anti-reflection layers 5 and 6 may be composed of $ZrO_2$. The surface of layer 6 is covered with a covering layer 7 of a transparent dielectric material. The covering layer 7 may be a glass layer of the same quality as the glass substrate 3.

The feature of the present invention is that the semiconductor filter element strips 2 are interposed between the first and second anti-reflection layers 5 and 6. By way of example, if refractive index of the glass layer 4 ($n_S$) and the refractive index of the covering layer ($n_D$) are both 1.6 and the refractive index $n_F$ of the semiconductor filter element strips 2 is 2.5, the refractive indexes $n_{T1}$ and $n_{T2}$ of the first and second anti-reflection layers 5 and 6, respectively, may be about 2.0, so that the following conditions are met:

$$n_S < n_{T1} < n_F, \quad n_D < n_{T2} < n_F,$$

$$\sqrt{n_F \cdot n_S} = \text{ca.}\, n_{T1} \quad \text{and} \quad \sqrt{n_F \cdot n_D} = \text{ca.}\, n_{T2}.$$

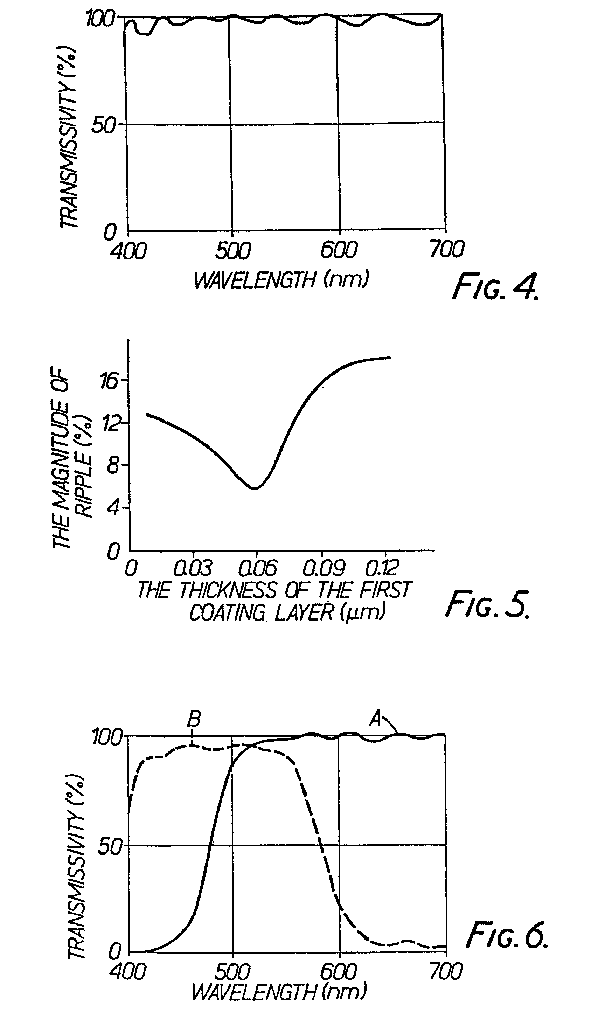

The first and second anti-reflection layers 5 and 6 have the effect of increasing the transmissivity at the region of the semiconductor filter element strips 2, i.e., in the path indicated by an arrow I in Figure 2, to about 95%, as shown in Figure 3. This remarkably reduces the ripples of the spectral transmissivity curve.

On the other hand, in the transparent region where light does not pass through the semiconductor filter element strips 2, as in path II in Figure 2, the layers 5 and 6 cause the reflection to reach a maximum value of 12% because of the difference between the refractive indexes of the layers 5 and 6 and of the glass layer 4; this means a decrease in transmissivity. This disadvantage can be minimised by adjusting the total thickness of the layers 5 and 6 so that the maximum transmissivity wavelength in spectral transmissivity through the layers 5 and 6 is in the range from 400 nm to 700 nm, as shown in Figure 4. Thus it is possible to provide the anti-reflection layers 5 and 6 without affecting substantially the transparent area. In order to obtain such spectral transmissivity, the total thickness of the layers 5 and 6 should be from 0.1 to 0.18 micrometres. The thickness of the first anti-reflection layer 5 remarkably reduces ripples of spectral transmissivity in the region of the semi-conductor filter element strips 2. As shown in Figure 5, the magnitude of the ripples is satisfactorily low when the thickness of the first anti-reflection layer 5 is from 0.05 to 0.07 micrometres; in addition the transmissivity had a maximum value when the thickness was in this range. On the other hand, the thickness of the second anti-reflection layer 6 does not affect the reduction of ripples so much. Therefore it is desirable to make the first anti-reflection layer 5 from 0.05 to 0.07 micrometres thick and the second anti-reflection layer 6 in such thickness that the total thickness of the two layers 5 and 6 is from 0.1 to 0.18 micrometres.

The semiconductor stripe filter described above has spectral transmissivity as shown in Figure 6, in which curve A represents the transmissivity along path I of Figure 2 and curve B represents the transmissivity along path III of Figure 2, wherein the transmissivity is determined by taking the amount of light transmitted along path II of Figure 2 as reference of 100%. It is seen from these curves that the coating filters do not affect the spectral characteristics of the dichroic filter element region.

As indicated above, the yellow light transmissive strips 2 may be of

$$Zn_x Cd_{1-x} S;$$

other suitable materials include

$$Zn_x Se_{1-x} Te,$$

$$ZnS_x Te_{1-x}$$

and

$$Zn_x Cd_{1-x} Se$$

(in all of which $0 \leqslant x \leqslant 1$). The anti-reflection layers 5 and 6 may, as mentioned above, be of $ZrO_2$; other suitable materials include, for example, $Y_2O_3$, $In_2O_3$, $ThO_2$, $HfO_2$, $CeO_2$, $TiO_2$, $Ta_2O_5$, $La_2O_3$, $Eu_2O_3$ and $ZnO$. The refractive indexes of the glass layer 4 and the covering layer 7 are both preferably in the range from 1.4 to 1.8 for practical convenience.

Generally speaking, the refractive index of a semiconductor varies with wavelength; it is largest at the fundamental absorption edge and decreases as the wavelength increases, so that the reflectivity tends to decrease as the wavelength increases. This tendency is remarkable when the semi-conductor film is thick. For example,

$$Zn_x Cd_{1-x} S \;(0 \leqslant x \leqslant 1)$$

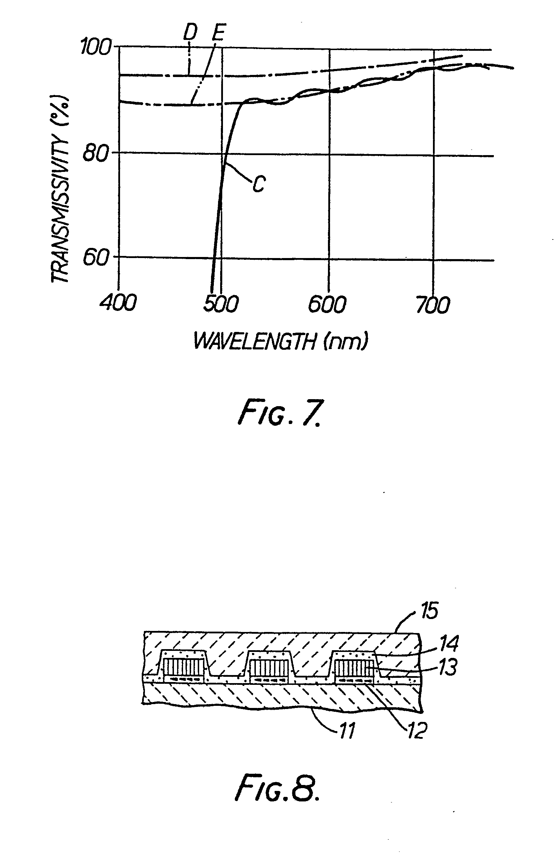

more than one micrometre thick has a spectral transmissivity curve as shown in Figure 7, curve C. Therefore it is preferable that the transparent region of the semiconductor stripe filter, i.e., the region along path II, should have a similar tendency of spectral transmissivity for the sake of good colour separating characteristics.

This can be achieved by controlling the thickness of the anti-reflection layers. The total optical thickness of the first and second anti-reflection layers is preferably less than one-quarter of the wavelength at the fundamental absorption edge of the semi-conductor filter element, or is larger than $\frac{1}{2} \times 700$ nm and smaller than three quarters of the wavelength at the fundamental absorption edge. The former condition means that a $\lambda_0/4$ reflection peak exists in the region of wavelengths shorter than that at the fundamental absorption edge, while the latter condition means that a $\frac{1}{2}\lambda_0$ transmission peak exists in the region of the wavelengths longer than 700 nm and a $3\lambda_0/4$ reflection peak exists in the region of wavelengths shorter than that at the fundamental absorption edge. Thus by utilizing the slant of reflection characteristic curve of a thin film, it is possible to match the transmissivity characteristic of the transparent region to that of the semiconductor filter element region. Curves D and E in Figure 7 represent examples of the spectral transmissivity of thus prepared anti-reflection layers.

An example in which the anti-reflection layers make the optical thickness smaller than one-quarter of the wavelength at the fundamental-absorption edge will now be described with reference to Figure 8, in which there is shown only a portion of one filter component which has the semiconductor filter element and the other component is omitted. On a glass substrate 11 with a refractive index of 1.6 is deposited a first anti-reflection layer 12 of $In_2O_3$ which has a refractive index of 2.0, and semiconductor filter element strips 13 of

$$Zn_xCd_{1-x}S \ (0 \leqslant x \leqslant 1)$$

are formed on layer 12. The anti-reflection layer 12 is 0.05 to 0.07 micrometres thick and is in strips of the same shape as the filter element strips 13. The numeral 14 represents a second anti-reflection layer which covers the filter strips 13 and the spaces between the filter strips 13. The second anti-reflection layer 14 is made of $Y_2O_3$ which has a refractive index of 1.9 and a thickness of 0.05 to 0.06 micrometres. A glass layer 15 with a refractive index of 1.6 covers the second anti-reflection layer 14.

The second anti-reflection layer 14 is one-quarter wavelength thick at the wavelength of 400 to 480 nm and has a maximum reflectivity of 7 to 8% and a mean reflectivity of about 4%. The spectral transmissivity thereof is represented by curve D (Figure 7).

The formation of the first anti-reflection layer 12 under the strips 13 aims at making the total thickness of the anti-reflection layers 12 and 14 small enough in the transparent region, maintaining a sufficient thickness of each anti-reflection layer in the filter stripe region. Therefore it is not necessary to remove the first anti-reflection layer 12 completely.

As an embodiment in which the anti-reflection layers make the total optical thickness larger than $\frac{1}{2} \times 700$ nm and smaller than three-quarter of the wavelength at the fundamental absorption edge, the same construction as the example of Figure 2 can be used. For example, the semiconductor filter element may be made of

$$Zn_xCd_{1-x}S \ (0 \leqslant x \leqslant 1)$$

and the first and second anti-reflection layers may be made of $Y_2O_3$. The first anti-reflection layer may have a thickness of 0.05 to 0.07 micrometres, and by adding the thickness of the second anti-reflection layer to that thickness, the above-mentioned requirement is satisfied. The glass substrate may have a refractive index of 1.6. As dielectric covering layer, an adhesive material with a refractive index of 1.55 may be used for the purpose of adhering the filter to the target of a camera tube or a solid state imaging device. The thus constructed semiconductor stripe filter exhibits desirable spectral transmissivity of the transparent region as shown by the curve E in Figure 7.

Although the invention has been described with reference to one striped light-selective filter elements being superimposed over another in staggered relation, a filter according to the invention may have any other suitable arrangement of striped filter element. For example, the filter may be a component of a striped-colour filter in which striped filter elements are superimposed over one another in parallel relation, or it may be a striped-colour filter which includes only one filter element layer.

## Claims

1. A semiconductor stripe filter for spatial colour encoding, which comprises a transparent underlayer (4, 11) of refractive index $n_S$, a transparent dielectric covering layer (7,15) of refractive index $n_D$ and a striped filter element array (2, 13) formed of semi-conductor material having a refractive index $n_F$ between said underlayer and said covering layer, characterised in that the filter further comprises a first transparent anti-reflection layer (5, 12) of refractive index $n_{T1}$ contiguous with one surface of the filter element array and disposed between said array and said underlayer, and a second transparent anti-reflection layer (6, 14) of reflective index $n_{T2}$ contiguous with the other surface of the filter element array, the refractive indices being such that

$$n_F > n_{T1} > n_S \text{ and } n_F > n_{T2} > n_D.$$

2. A filter according to claim 1, in which $\sqrt{n_F \cdot n_S}$ is within $n_{T1} \pm 15\%$, and $\sqrt{n_F \cdot n_D}$ is within $n_{T2} \pm 15\%$.

3. A filter according to claim 1 or 2, in which regions of the anti-reflection layers which are not contiguous with said surface of said array have maximum transmissivity in the wavelength range 400 to 700 nanometres.

4. A filter according to any of claims 1 to 3, in which the first anti-reflection layer has a thickness of 0.05 to 0.07 micrometres.

5. A filter according to claim 1, in which the total optical thickness of the first and second anti-reflection layers is less than one quarter of the wavelength at the fundamental absorption edge of the filter element, or is greater than $\frac{1}{2} \times 700$ nm and smaller than three-quarters of the wavelength at the fundamental absorption edge.

6. A filter according to any of claims 1 to 5, in which $n_S$ and $n_D$ are from 1.4 to 1.8, said semiconductor material is

$$Zn_xCd_{1-x}S,$$

$$Zn_xSe_{1-x}Te$$

or

$$ZnS_xTe_{1-x'}$$

in which $0 \leqslant x \leqslant 1$, and said first and second anti-reflection layers are of $ZrO_2$, $Y_2O_3$, $In_2O_3$, $ThO_2$, $HfO_2$, $CeO_2$, $TiO_2$, $Ta_2O_5$, $ZnO$, $Eu_2O_3$ or $La_2O_3$.

7. A filter according to claim 6, in which said semiconductor material is $Zn_xCd_{1-x}S$ and said first and second anti-reflection layers are or $ZrO_2$, $Y_2O_3$ or $In_2O_3$.

8. A filter according to any of claims 1 to 7, in which said transparent underlayer (4) is provided on a transparent substrate (3) having a further striped filter element array (1) thereon.


## Revendications

1. Filtre à bandes semiconducteur pour codage couleur spatial, qui comprend une sous-couche transparente (4, 11) d'indice de réfraction $n_S$, une couche de revêtement diélectrique transparente (7, 15) d'indice de réfraction $n_D$ et un réseau d'éléments de filtrage à bandes (2, 13) qui est formé d'une matière semi-conductrice possédant un indice de réfraction $n_F$ et est disposé entre la sous-couche et la couche de revêtement, caractérisé en ce que le filtre comprend en outre une première couche antireflet transparente (5, 12) d'indice de réfraction $n_{T1}$ contiguë à une première surface du réseau d'éléments de filtrage et disposée entre ledit réseau et ladite sous-couche, et une deuxième couche antireflet transparente (6, 14) d'indice de réfraction $n_{T2}$ contiguë à l'autre surface du réseau d'éléments de filtrage, les indices de réfraction étant tels que

$$n_F > n_{T1} > n_S \text{ et } n_F > n_{T2} > n_D.$$

2. Filtre selon la revendication 1, dans lequel $\sqrt{n_F \cdot n_S}$ est compris dans les limites $n_{T1} \pm 15\%$ et $\sqrt{n_F \cdot n_D}$ est compris dans les limites $n_{T2} \pm 15\%$.

3. Filtre selon la revendication 1 ou 2, dans lequel les régions des couches antireflet qui se sont pas contiguës à ladite surface dudit réseau ont un coefficient de transmission optimal dans la gamme de longueurs d'onde de 400 à 700 nm.

4. Filtre selon l'une quelconque des revendications 1 à 3, dans lequel la première couche antireflet a une épaisseur de 0,05 à 0,07 micron.

5. Filtre selon la revendication 1, dans lequel l'épaisseur optique totale de la première et de la deuxième couche antireflet est inférieure au quart de la longueur d'onde correspondant au bord d'absorption fondamentale de l'élément de filtrage, ou est supérieure à $(1/2) \times 700$ nm et plus petite que les trois quarts de la longueur d'onde correspondant au bord d'absorption fondamentale.

6. Filtre selon l'une quelconque des revendications 1 à 5, dans lequel $n_S$ et $n_D$ valent de 1,4 à 1,8, ladite matière semi-conductrice est

$$Zn_xCd_{1-x}S,$$

$$Zn_xSe_{1-x}Te$$

ou

$$ZnS_xTe_{1-x'}$$

avec $0 \leqslant x \leqslant 1$, et lesdites première et deuxième couches antireflet sont faites de $ZrO_2$, $Y_2O_3$, $In_2O_3$, $ThO_2$, $HfO_2$, $CeO_2$, $TiO_2$, $Ta_2O_5$, $ZnO$, $Eu_2O_3$ ou $La_2O_3$.

7. Filtre selon la revendication 6, dans lequel la matière semiconductrice est $Zn_xCd_{1-x}S$ et lesdites première et deuxième couches antireflet sont faites de $ZrO_2$, $Y_2O_3$ ou $In_2O_3$.

8. Filtre selon l'une quelconque des revendications 1 à 7, dans lequel ladite sous-couche transparente (4) est disposée sur un substrat transparent (3) sur lequel est déposé un autre réseau (1) d'éléments de filtrage à bandes.


## Patentansprüche

1. Halbleiter-Streifenfilter für die räumliche Farbcodierung, das umfaßt eine transparente Unterlangenschicht (4, 11) mit einem Brechungsindex $n_S$, eine transparente dielektrische Überzugsschicht (7, 15) mit einem Brechungsindex $n_D$ und eine Streifen-Filterelement-Anordnung (2, 13) aus einem Halbleitermaterial mit einem Brechungsindex $n_F$ zwischen der Unterlagenschicht und der Überzugsschicht, dadurch gekennzeichnet, daß der Filter außerdem aufweist eine erste transparente Antireflexionsschicht (5, 12) mit einem Brechungsindex $n_{T1}$, die an eine Oberfläche der Filterelement-Anordnung angrenzt und zwischen dieser Anordnung und der Unterlagenschicht angeordnet ist, und· eine zweite transparente Antireflexionsschicht (6, 14) mit einem Brechungsindex $n_{T2}$, die and die andere Oberfläche der Filterelement-Anordnung angrenzt, wobei die Brechungsindices so sind, daß $n_F > n_{T1} > n_S$ und $n_F > n_{T2} > n_D$ ist.

2. Filter nach Anspruch 1, worin $\sqrt{n_F \cdot n_S}$ innerhalb $n_{T1} \pm 15\%$ und $\sqrt{n_F \cdot n_D}$ innerhalb $n_{T2} \pm 15\%$ liegen.

3. Filter nach Anspruch 1 oder 2, worin die Bereiche der Antireflexionsschichten, die nicht an die Oberfläche der Anordnung angrenzen, eine maximale Durchlässigkeit im Wellenlängenbereich von 400 bis 700 nm haben.

4. Filter nach einem der Ansprüche 1 bis 3, worin die erste Antireflexionsschicht eine Dicke von 0,05 bis 0,07 $\mu$m hat.

5. Filter nach Anspruch 1, worin die optische Gesamtdicke der ersten und zweiten Antireflexionsschichten weniger als 1/4 der Wellenlänge an der Grundabsorptionskante des Filterelements oder mehr als $1/2 \times 700$ nm und weniger als 3/4 der Wellenlänge an der Grundabsorptionskante beträgt.

6. Filter nach einem der Ansprüche 1 bis 5, worin $n_S$ und $n_D$ 1,4 bis 1,8 betragen, das Halbleitermaterial

$$Zn_xCd_{1-x}S,$$

$$Zn_2Se_{1-x}Te$$

oder

$$ZnS_xTe_{1-x'}$$

worin $0 \leqslant x \leqslant 1$ ist, und die erste und die zweite Antireflexionsschicht aus $ZrO_2$, $Y_2O_3$, $In_2O_3$, $ThO_2$, $HfO_2$, $CeO_2$, $TiO_2$, $Ta_2O_5$, $ZnO$, $Eu_2O_3$ oder $La_2O_3$ bestehen.

7. Filter nach Anspruch 6, worin das Halbleitermaterial $Zn_xCd_{1-x}S$ ist und die erste und die zweite Antireflexionsschicht aus $ZrO_2$, $Y_2O_3$ oder $In_2O_3$ sind.

8. Filter nach einem der Ansprüche 1 bis 7, worin die transparente Unterlagenschicht (4) auf einem transparenten Substrat (3) mit einer weiteren darauf aufgebrachten Streifenfilterelement-Anordnung (1) versehen ist.

FIG. I.

(PRIOR ART)

FIG. 2.

FIG. 3.

1

0 024 876

FIG. 4.

FIG. 5.

FIG. 6.

FIG. 7.

FIG.8.